# EUROPÄISCHE PATENTSCHRIFT

(11) **EP 3 482 612 B1**
(45) Veröffentlichungstag und Bekanntmachung des Hinweises auf die Patenterteilung: **01.07.2020**
(21) Anmeldenummer: 18401085.8
(22) Anmeldetag: 16.10.2018
(51) Int. Cl.: A01B 33/06

(54) **BODENBEARBEITUNGSMASCHINE**
SOIL PROCESSING MACHINE
MACHINE DE TRAITEMENT DU SOL

(30) Priorität: 08.11.2017 DE 102017126050
(43) Veröffentlichungstag der Anmeldung: 15.05.2019
(73) Patentinhaber: Amazonen-Werke H. Dreyer GmbH & Co. KG, 49205 Hasbergen (DE)
(72) Erfinder: Ehlers, Jan-Gerd, 26160 Bad Zwischenahn (DE)

(56) Entgegenhaltungen:
- EP-A1- 3 050 415
- DE-A1-102016 120 620
- GB-A- 2 158 685

## Beschreibung

Die Erfindung betrifft eine Bodenbearbeitungsmaschine gemäß dem Oberbegriff des Patentanspruches 1.

Eine derartige Bodenbearbeitungsmaschine ist in GB 2 158 685 A offenbart.

Eine weitere derartige Bodenbearbeitungsmaschine ist in der nicht vorveröffentlichten deutschen Anmeldung DE102016120620A1 beschrieben. Diese Maschine ist als Kreiselegge ausgeführt. Die Kreiselegge wird im Wesentlichen gebildet durch einen quer zur Fahrtrichtung verlaufenden Rahmen. In dem Rahmen sind mehrere rotierend angetriebene Werkzeugkreisel beabstandet nebeneinander angeordnet. Jeder Werkzeugkreisel trägt hierbei zwei Bearbeitungswerkzeuge. Die Bearbeitungswerkzeuge sind als Zinken ausgebildet. An ihrem seitlichen Ende ist die Kreiselegge mit einer Seitenschildanordnung versehen. Die Seitenschildanordnung umfasst ein Seitenschild mit einem Tragarm, wobei der Tragarm das Seitenschild trägt und die Verbindung zum Rahmen darstellt. Das Seitenschild befindet sich seitlich beabstandet von den Werkzeugkreiseln. Weiter verfügt die Kreiselegge über eine Verstellanordnung, mittels welcher sich die Seitenschildanordnung in unterschiedliche Abstände zu den Werkzeugkreiseln bringen lässt. Der Verstellanordnung wird hierbei translatorisch bewegt. Die translatorische Verstellbewegung wird auf den Tragarm übertragen, so dass sich die Seitenschildanordnung seitlich zu den Werkzeugkreiseln bewegen lässt.

Nachteilig hierbei ist, dass die translatorische Verstellbewegung besonders anfällig bei Verschmutzungen ist. Da durch gattungsgemäße Bodenbearbeitungsmaschinen Erdbewegungen vorgenommen werden, kommt es regelmäßig zu starken Verschmutzungen, besonders der bodennahen Komponenten. Verschmutzungen führen dazu, dass die ohnehin schon reibintensive Lagerung der Verstellanordnung und des Tragarms weiter belastet wird und verstärkt zum Verklemmen neigt.

Die EP 3 050 415 A1 offenbart außerdem eine Höhenverstellung für ein Seitenschild.

Der Erfindung liegt die Aufgabe zugrunde, eine Verstellanordnung für eine Seitenschildanordnung zu schaffen, die die bekannten Probleme vermeidet und einfach ausgestaltet ist. Diese Aufgabe wird erfindungsgemäß dadurch gelöst, dass die Verstellanordnung zumindest eine Schwenkachse und zumindest einen Schwenkhebel umfasst, dass der Tragarm beabstandet, schwenkbar an dem Schwenkhebel angelenkt ist, dass der Schwenkhebel über die Schwenkachse drehbar am Rahmen angeordnet ist, dass die Seitenschildanordnung durch Verdrehung des Schwenkhebels um die Schwenkachse in den unterschiedlichen, seitlichen Abständen feststellbar ist.

Diese Aufgabe wird erfindungsgemäß dadurch gelöst, dass die Verstellanordnung zumindest eine Schwenkachse und zumindest einen Schwenkhebel umfasst, dass der Tragarm beabstandet, schwenkbar an dem Schwenkhebel angelenkt ist, dass der Schwenkhebel über die Schwenkachse drehbar am Rahmen angeordnet ist, dass die Seitenschildanordnung durch Verdrehung des Schwenkhebels um die Schwenkachse in den unterschiedlichen Abständen feststellbar ist.

Infolge dieser Maßnahme wird erreicht, dass die Verstellanordnung zur Verbringung der Seitenschildanordnung an Stelle einer tranlatorischen, eine einfache und robuste rotatorische Verstellbewegung nutzt. Die Relativbewegungen zwischen bewegten Bauteilen lassen sich so auf ein Minimum beschränken. Zudem lassen sich die bewegten Bauteile einfach lagern und an der Oberseite des Rahmens positionieren. Zusammenfassend ist der Einfluss von Verschmutzungen auf die Verstellanordnung so in einfacher Weise vermindert und der Aufbau zweckmäßig gestaltet.

Eine Weiterbildung der Erfindung ist dadurch gekennzeichnet, dass die Verstellanordnung zumindest eine Verriegelung umfasst, und dass die Seitenschildanordnung mittels der Verriegelung im verbrachten Zustand feststellbar ist. In einfacher Weise wird so verhindert, dass die Verstellanordnung ungewollt, beispielsweise durch Betriebskräfte, betätigt wird. In einer vorteilhaften Weiterbildung der Erfindung ist vorgesehen, dass die Verriegelung eine lösbare, formschlüssige Verbindung nutzt. Eine besonders vorteilhafte Weiterbildung der Erfindung sieht vor, dass die Verriegelung zumindest eine Drehachse und zumindest ein Sicherungselement umfasst, wobei das Sicherungselement dazu eingerichtet ist die formschlüssige Verbindung zu ent-/sichern. Da gattungsgemäße Bodenbearbeitungsmaschinen teils starken Erschütterungen und Vibrationen ausgesetzt sind, ist die Verrieglung infolge dieser Maßnahme sicher gestaltet und verhindert eine ungewollte Betätigung der Verstellanordnung besonders im Betrieb oder während Transportfahrten.

In einer zweckmäßigen Weiterbildung der Erfindung sind zumindest zwei unterschiedlichen Abständen des Seitenschilds zu den Werkzeugkreiseln je eine Transportstellung und eine Arbeitsstellung zugeordnet. Um die gesetzlichen Bestimmungen für Transportfahrten auf öffentlichen Straßen zu erfüllen, ist ein minimierter Abstand des Seitenschilds zu den Werkzeugkreiseln der Transportstellung zugeordnet. Die Gesamtbreite der Maschine lässt sich so zweckentsprechend auf die gesetzliche Höchstbreite beschränken. Um bei der Bodenbearbeitung eine große Flächenleistung zu erzielen, ist der maximale Abstand des Seitenschilds zu den Werkzeugkreiseln der Arbeitsstellung zugeordnet. In einfacher Weise lässt sich so die Arbeitsbreite vergrößern.

In einer möglichen Weiterbildung der Erfindung umfasst die Bodenbearbeitungsmaschine ein Universalwerkzeug, mit dessen Hilfe sich die Bodenbearbeitungsmaschine zwischen Transportstellung und Arbeitsstellung verbringen lässt. Infolge dieser Maßnahme wird dem Benutzer die einfache Verstellung der Seitenschildanordnung ermöglicht. Besonders vorteilhaft ist hierbei, dass kein zusätzliches Werkzeug bei der Feldarbeit mitzuführen ist.

In einer alternativen Weiterbildung der Erfindung ist es möglich, dass die Bodenbearbeitungsmaschine mittels eines elektrischen Aktuators, pneumatischen Aktuators und/oder eines hydraulischen Aktuators zwischen Transportstellung und Arbeitsstellung verbringbar ist. Diese Weiterbildung zeichnet sich durch hohen Komfort für den Bediener aus. Zum Verbringen der angehangenen Bodenbearbeitungsmaschine ist es denkbar, dass der Aktuator fernbedienbar ist, so dass der Bediener zum Wechsel zwischen Arbeits- und Transportstellung die Führungskabine nicht verlassen muss.

Die erfindungsgemäße Bodenbearbeitungsmaschine wird ferner vorteilhaft dadurch weitergebildet, dass ihr zumindest eine Federvorrichtung zugeordnet ist, wobei die Federvorrichtung unterstützend zu der Verstellanordnung wirkt. Die Federvorrichtung ist hierbei derart angeordnet, dass die Federwirkung die Bewegung der Verstellanordnung in die als Transport- oder Arbeitsstellung eingeführten Endlagen erleichtert. Dies hat zusätzlich den Vorteil, dass die Endlage federnd gehalten wird. Die Seitenschildanordnung kehrt folglich nach einer Ausweichbewegung, beispielsweise nach Aufsetzen auf dem Boden, unter Einwirkung der Federvorrichtung wieder in die zuvor festgelegte Endlage zurück.

Weitere Einzelheiten der Erfindung sind der Beispielsbeschreibung und den Zeichnungen zu entnehmen. Die Zeichnungen zeigen
- Fig.1: ein Ausführungsbeispiel der erfindungsgemäßen Bodenbearbeitungsmaschine in Transportstellung, in Teil- und perspektivischer Ansicht;
- Fig.2: die Bodenbearbeitungsmaschine aus Fig.1 in perspektivischer Ansicht und Detaildarstellung;
- Fig.3: die Bodenbearbeitungsmaschine aus Fig.1 und Fig.2 in Teil- und Frontansicht;
- Fig.4: die Bodenbearbeitungsmaschine aus Fig.1, Fig.2 und Fig.3 in Arbeitsstellung, in perspektivischer Ansicht und in Detaildarstellung;
- Fig.5: die Bodenbearbeitungsmaschine aus Fig.4 in Teil- und Frontansicht.

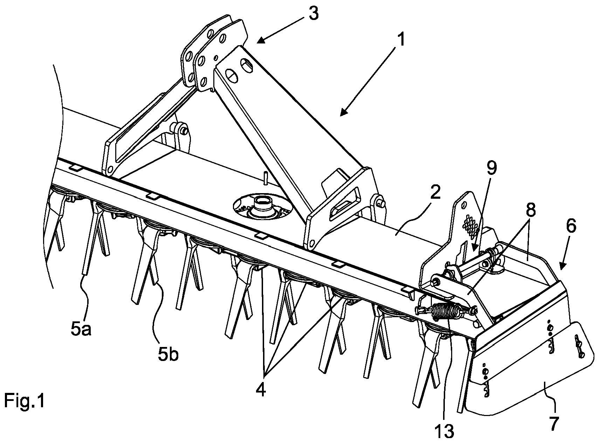

Eine als Kreiselegge ausgebildete Bodenbearbeitungsmaschine 1 ist in Fig.1 gezeigt. Die Bodenbearbeitungsmaschine 1 weist einen quer zur Fahrtrichtung verlaufenden Rahmen 2 und einen Dreipunktturm 3 auf. Der Dreipunktturm 3 wird genutzt, um die Bodenbearbeitungsmaschine 1 mit einer nicht dargestellten landwirtschaftlichen Zugmaschine zu verbinden. In dem Rahmen 2 ist eine Mehrzahl beabstandet zueinander angeordneter Werkzeugkreisel 4 befestigt. Die Werkzeugkreisel 4 tragen jeweils Bearbeitungswerkzeuge 5a, 5b und werden über nicht dargestellte Mittel mit der ebenfalls nicht dargestellten landwirtschaftlichen Zugmaschine verbunden und so rotierend angetrieben. Die Bodenbearbeitungswerkzeuge 5a, 5b sind gegenüberliegend positioniert und als Zinken ausgebildet.

An ihren seitlichen Enden weist die Bodenbearbeitungsmaschine 1 jeweils eine Seitenschildanordnung 6 auf. Die Seitenschildanordnung 6 umfasst ein Seitenschild 7, welches seitlich beabstandet neben den Werkzeugkreiseln 4 angeordnet ist, und zwei Tragarme 8. Die Tragarme 8 sind starr mit dem Seitenschild 7 gefügt und verbinden dieses über eine Verstellanordnung 9 mit dem Rahmen 2. Die Verstellanordnung 9 ist mittels geeigneter Mittel dazu eingerichtet die Seitenschildanordnung 6 in unterschiedliche Abstände zu den Werkzeugkreiseln 4 zu bringen. Die Fig.1, Fig.2 und Fig.3 zeigen die erfindungsgemäße Bodenbearbeitungsmaschine 1 mit einem minimalen Abstand zwischen Seitenschild 7 und Werkzeugkreiseln 4.

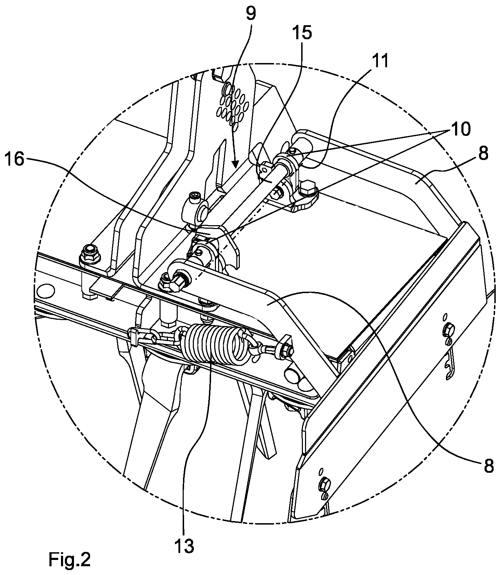

Die geeigneten Mittel der Verstellanordnung 9, wie in Fig.2 gezeigt, umfassen in der dargestellten Ausführungsform der erfindungsgemäßen Bodenbearbeitungsmaschine 1 zwei Schwenkhebel 10, wobei die zwei Schwenkhebel 10 so gelagert sind, dass sie um eine gemeinsame Schwenkachse 11 drehbar, ortsfest am Rahmen befestigt sind. Die Schwenkachse 11 wird gebildet durch die auf dem Rahmen 2 in Fahrtrichtung hintereinander fluchtend vorne und hinten (verdeckt durch vorderen Tragarm 8) positionierten Lager der Schwenkhebel 10. Die beiden Tragarme 8 der Seitenschildanordnung 6 sind hierbei jeweils beabstandet, ebenfalls schwenkbar an dem jeweiligen Schwenkhebel 10 angelenkt. Zwischen den beiden Tragarmen 8 verläuft eine Längsverbindung 15. Die Längsverbindung 15 ist als kreisrunde Stange ausgeführt und drehfest am oberen Ende der Schwenkhebel 10 angeordnet, so dass eine Verdrehung der Schwenkhebel 10 zu einer Bewegung der Längsverbindung 15 auf einer Kreisbahn führt.

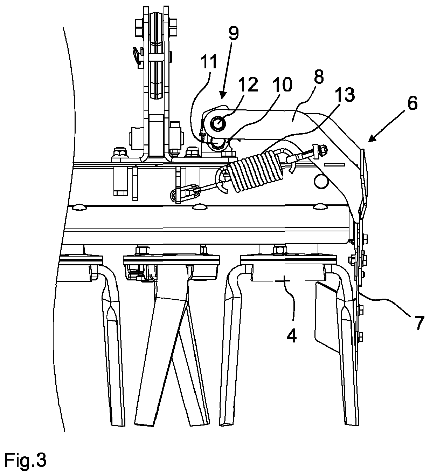

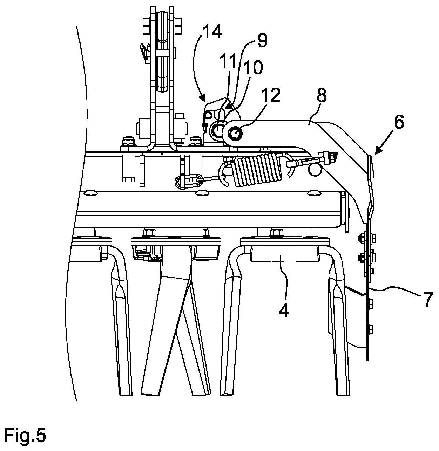

In Fig.3 ist die Bodenbearbeitungsmaschine 1 in Transportstellung zu sehen. Das heißt, dass die Seitenschildanordnung 6 sich in einem minimalen Abstand zu den Werkzeugkreiseln 4 befindet. Um die Bodenbearbeitungsmaschine 1 in die Arbeitsstellung zu verbringen, so dass der Abstand zwischen der Seitenschildanordnung 6 und den Werkzeugkreiseln 4 maximal wird, wie in Fig. 5 gezeigt, werden die Schwenkhebel 10 um die Schwenkachse 11 verdreht. Dadurch, dass die Tragarme 8 schwenkbar an den Schwenkhebeln 10 befestigt sind, überträgt sich die Verdrehung der Schwenkhebel 10 in eine Schwenkbewegung des Seitenschilds 7. In einfacher Weise lässt sich so die Seitenschildanordnung 6 durch Verdrehung der Schwenkhebel 10 um die Schwenkachse 11 in unterschiedlichen Abständen feststellen. Zur Verbringung der Bodenbearbeitungsmaschine 1 zwischen den verschiedenen Stellungen umfasst die Bodenbearbeitungsmaschine 1 ein nicht dargestelltes Universalwerkzeug. Das Universalwerkzeug wird auf einen als Sechskantkopf ausgeführten Stellpunkt 12 aufgesetzt. Der Stellpunkt 12 befindet sich an dem der Schwenkachse 11 gegenüberliegenden Ende der Schwenkhebel 10 seitlich beabstandet am vorderen Ende der Längsverbindung 15, wie Fig.3 und Fig.5 zeigen. Idealerweise ist das Universalwerkzeug länglich ausgeführt, so dass die Schwenkbewegung der Seitenschildanordnung 6 durch die Verdrehung der Schwenkhebel 10 in einfacher Weise manuell herbeigeführt werden kann.

Alternativ wäre es denkbar, dass diese Stellbewegungen in einer nicht dargestellten Ausführungsform der Erfindung durch geeignete elektrische, pneumatische und/oder hydraulische Aktuatoren herbeigeführt werden, um eine Bodenbearbeitungsmaschine 1 zwischen Transportstellung und Arbeitsstellung zu verbringen.

Um die Funktion der Verstellanordnung 9 zu unterstützen und zu sichern, weist die dargestellte Ausführungsform der Bodenbearbeitungsmaschine 1 eine als Zug-Spiralfeder mit Haken an beiden Enden ausgeführte Federvorrichtung 13 und eine Verriegelung 14 auf. Die Federvorrichtung 13 ist zwischen dem Rahmen 2 und dem vorderen Tragarm 8 angeordnet. In Fig.3 ist zu sehen, dass die Federvorrichtung 13 in Transportstellung der Bodenbearbeitungsmaschine 1 den Tragarm 8 und somit die Seitenschildanordnung 6 in Richtung des Rahmens 2 zieht und so die Verstellanordnung 9 unterstützt. In Fig.5 ist zu sehen, dass die Federvorrichtung 13 in Arbeitsstellung der Bodenbearbeitungsmaschine 1 den Tragarm 8 ebenfalls in Richtung des Rahmens 2 zieht. Die Zugwirkung der Federvorrichtung 13 am Tragarm 8 zeigt hierbei weg von einem Scheitelpunkt zwischen Transport- und Arbeitsstellung, welcher in der waagerechten Lage der Umlenkhebel 10 erreicht ist. Somit wird die Verstellanordnung 9 auch in Arbeitsstellung der Bodenbearbeitungsmaschine 1 durch die Federvorrichtung 13 unterstützt.

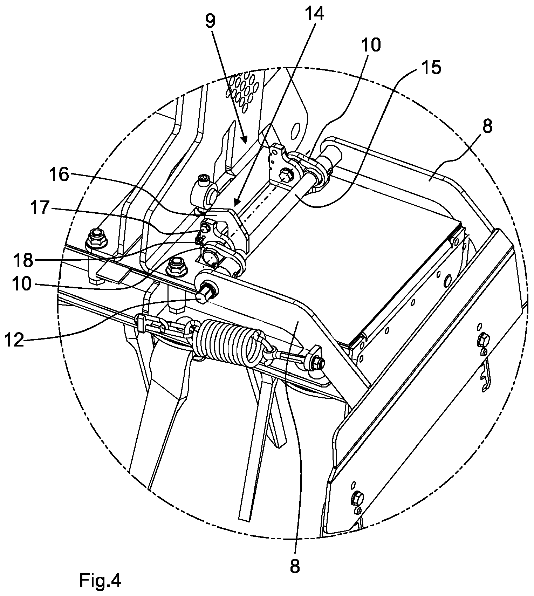

Die Verriegelung 14 ist in Fig.4 und Fig.5 zu sehen. Um die Position der Seitenschildanordnung 6 in den beiden Hauptstellungen zu sichern, umfasst die Verriegelung 14 eine Sicherungsklinke 16. Die Sicherungsklinke 16 ist an ihrem oberen Ende mittels einer Drehachse 17 drehbar am Rahmen 2 befestigt. Das untere Ende der Sicherungsklinke 16 ist kreisförmig korrespondierend zu der Längsverbindung 15 ausgebildet. Befindet sich nun die Bodenbearbeitungsmaschine 1 in Arbeitsstellung, wie in Fig. 4 zu sehen ist, lässt sich das untere Ende der Sicherungsklinke 16 auf die Längsverbindung 15 absenken, wodurch eine formschlüssige Verbindung entsteht. Diese formschlüssige Verbindung wird gesichert durch ein Sicherungselement 18. Das Sicherungselement 18 verhindert, dass die Sicherungsklinke 16 um die Drehachse 17 drehen kann, indem es durch eine Öffnung im Rahmen 2 in eine geeignete Bohrung in der Sicherungsklinke 16 eingeführt wird. Auf diese Weise wird die formschlüssige Verbindung gegen ungewolltes Lösen gesichert.

Um die formschlüssige Verbindung zu entsichern und die Verstellanordnung 9 betätigen zu können, ist das Sicherungselement 18 lösbar ausgeführt. Ist das Sicherungselement 18 gelöst, so lässt sich die Sicherungsklinke 16 drehen und somit von der Längsverbindung 15 abheben. Die Verstellanordnung 9 kann in bereits erläuterter Weise betätigt werden, so dass die Transportstellung der Bodenbearbeitungsmaschine 1, wie in Fig. 2 zu sehen ist, erreicht wird. Um die Seitenschildanordnung 6 mittels der Verriegelung 14 festzustellen, wird die Sicherungsklinke 16 abgesenkt. Die Längsverbindung 15 befindet sich gegenüber der Arbeitsstellung, wie in Fig.4, in Transportstellung, wie in Fig.2, in einer angehobenen Position, so dass sich die Sicherungsklinke 16 mit ihrem mittleren Teil über die Längsverbindung 15 legt. Durch Wiedereinführen des Sicherungselementes 18 wird ein Anheben der Sicherungsklinke 16 verhindert, so dass eine formschlüssige Verbindung zwischen Sicherungsklinke 16 und Längsverbindung 15 entsteht. Eine Bewegung der Schwenkhebel 10 wird somit verhindert, da die, drehfest mit den Schwenkhebeln 10 verbundene, Längsverbindung 15 gesperrt ist. Somit ist die Seitenschildanordnung 6 mittels der Verriegelung 14 festgestellt.

### Bezugszeichenliste

- 1: Bodenbearbeitungsmaschine
- 2: Rahmen
- 3: Dreipunktturm
- 4: Werkzeugkreisel
- 5a, 5b: Bearbeitungswerkzeuge
- 6: Seitenschildanordnung
- 7: Seitenschild
- 8: Tragarm
- 9: Verstellanordnung
- 10: Schwenkhebel
- 11: Schwenkachse
- 12: Stellpunkt
- 13: Federvorrichtung
- 14: Verriegelung
- 15: Längsverbindung
- 16: Sicherungsklinke
- 17: Drehachse
- 18: Sicherungselement

## Patentansprüche

1. Bodenbearbeitungsmaschine (1), mit
- in einem Rahmen (2) angeordneten, mehreren rotierend angetriebenen und Bearbeitungswerkzeuge (5a, 5b) tragenden Werkzeugkreiseln (4); und
- zumindest einer Seitenschildanordnung (6), welche ein seitlich von den Werkzeugkreiseln (4) beabstandet angeordnetes Seitenschild (7) und zumindest einen Tragarm (8) umfasst, wobei der zumindest eine Tragarm (8) das Seitenschild (7) trägt; und
- zumindest einer Verstellanordnung (9), wobei die zumindest eine Seitenschildanordnung (6) mittels der Verstellanordnung (9) in zumindest zwei unterschiedliche Abstände des Seitenschilds (7) seitlich zu den Werkzeugkreiseln (4) bringbar ist;
**dadurch gekennzeichnet, dass** die Verstellanordnung (9) zumindest eine Schwenkachse (11) und zumindest einen Schwenkhebel (10) umfasst, dass der Tragarm (8) beabstandet, schwenkbar an dem Schwenkhebel (10) angelenkt ist, dass der Schwenkhebel (10) über die Schwenkachse (11) drehbar am Rahmen (2) angeordnet ist, dass die Seitenschildanordnung (6) durch Verdrehung des Schwenkhebels (10) um die Schwenkachse (11) in den unterschiedlichen, seitlichen Abständen feststellbar ist.

2. Bodenbearbeitungsmaschine (1) nach Anspruch 1, **dadurch gekennzeichnet, dass** die Verstellanordnung (9) zumindest eine Verriegelung (14) umfasst, dass die Seitenschildanordnung (6) mittels der Verriegelung (14) im verbrachten Zustand feststellbar ist.

3. Bodenbearbeitungsmaschine (1) nach Anspruch 2, **dadurch gekennzeichnet, dass** die Verriegelung (14) eine lösbare, formschlüssige Verbindung nutzt.

4. Bodenbearbeitungsmaschine (1) nach Anspruch 2 und 3, **dadurch gekennzeichnet, dass** die Verriegelung (14) zumindest eine Drehachse (17) und zumindest ein Sicherungselement (18) umfasst, dass das Sicherungselement (18) dazu eingerichtet ist die formschlüssige Verbindung zu ent-/sichern.

5. Bodenbearbeitungsmaschine (1) nach zumindest einem der vorstehenden Ansprüche, **dadurch gekennzeichnet, dass** zumindest zwei unterschiedlichen, seitlichen Abständen des Seitenschilds (7) zu den Werkzeugkreiseln (4) eine Transportstellung und eine Arbeitsstellung zugeordnet ist.

6. Bodenbearbeitungsmaschine (1) nach Anspruch 5, **dadurch gekennzeichnet, dass** die Bodenbearbeitungsmaschine (1) ein Universalwerkzeug umfasst, dass die Bodenbearbeitungsmaschine (1) mittels des Universalwerkzeugs zwischen Transportstellung und Arbeitsstellung verbringbar ist.

7. Bodenbearbeitungsmaschine (1) nach Anspruch 5, **dadurch gekennzeichnet, dass** die Bodenbearbeitungsmaschine (1) mittels eines elektrischen Aktuators, pneumatischen Aktuators und/oder eines hydraulischen Aktuators zwischen Transportstellung und Arbeitsstellung verbringbar ist.

8. Bodenbearbeitungsmaschine (1) nach zumindest einem der vorstehenden Ansprüche, **dadurch gekennzeichnet, dass** der Bodenbearbeitungsmaschine (1) zumindest eine Federvorrichtung (13) zugeordnet ist, dass die Federvorrichtung (13) unterstützend zu der Verstellanordnung (9) wirkt.

## Claims

1. Soil cultivation machine (1) having
- a plurality of rotationally driven rotary tools (4) that are arranged in a frame (2) and carry cultivation tools (5a, 5b); and
- at least one side plate arrangement (6), which comprises a side plate (7), arranged in a manner spaced apart laterally from the rotary tools (4), and at least one support arm (8), wherein the at least one support arm (8) carries the side plate (7); and
- at least one adjusting arrangement (9), wherein the at least one side plate arrangement (6) is able to be brought into at least two different distances of the side plate (7) laterally with respect to the rotary tools (4) by means of the adjusting arrangement (9);
**characterized in that** the adjusting arrangement (9) comprises at least one pivot axle (11) and at least one pivot lever (10), **in that** the support arm (8) is articulated in a pivotable manner to the pivot lever (10) in a manner spaced apart therefrom, **in that** the pivot lever (10) is arranged on the frame (2) in a rotatable manner via the pivot axle (11), and **in that** the side plate arrangement (6) is able to be fixed at the different, lateral distances by the pivot lever (10) being rotated about the pivot axle (11).

2. Soil cultivation machine (1) according to Claim 1, **characterized in that** the adjusting arrangement (9) comprises at least one lock (14), and **in that** the side plate arrangement (6) is able to be fixed in the positioned state by means of the lock (14).

3. Soil cultivation machine (1) according to Claim 2, **characterized in that** the lock (14) uses a releasable, form-fitting connection.

4. Soil cultivation machine (1) according to Claim 2 and 3, **characterized in that** the lock (14) comprises at least one pivot pin (17) and at least one securing element (18), and **in that** the securing element (18) is designed to secure/release the form-fitting connection.

5. Soil cultivation machine (1) according to at least one of the preceding claims, **characterized in that** a transport position and a working position are assigned to at least two different lateral distances of the side plate (7) from the rotary tools (4).

6. Soil cultivation machine (1) according to Claim 5, **characterized in that** the soil cultivation machine (1) comprises a universal tool, and **in that** the soil cultivation machine (1) is able to be transferred between the transport position and working position by means of the universal tool.

7. Soil cultivation machine (1) according to Claim 5, **characterized in that** the soil cultivation machine (1) is able to be transferred between the transport position and working position by means of an electric actuator, pneumatic actuator and/or a hydraulic actuator.

8. Soil cultivation machine (1) according to at least one of the preceding claims, **characterized in that** the soil cultivation machine (1) is assigned at least one spring device (13), and **in that** the spring device (13) acts in a supporting manner with respect to the adjusting arrangement (9).

## Revendications

1. Machine de traitement du sol (1), comprenant
- plusieurs toupies à outils (4), disposées dans un cadre (2), entraînées en rotation et portant des outils de traitement (5a, 5b) ; et
- au moins un arrangement d'écran latéral (6), qui comporte un écran latéral (7) disposé latéralement aux toupies à outils (4) et espacé de celles-ci et comprenant au moins un bras porteur (8), l'au moins un bras porteur (8) portant l'écran latéral (7) ; et
- au moins un arrangement de positionnement (9), l'au moins un arrangement d'écran latéral (6) pouvant être amené au moyen de l'arrangement de positionnement (9) à au moins deux écarts différents de l'écran latéral (7) latéralement aux toupies à outils (4) ;
**caractérisée en ce que** l'arrangement de positionnement (9) comporte au moins un axe de pivotement (11) et au moins un levier de pivotement (10), **en ce que** le bras porteur (8) est articulé pivotant au levier de pivotement (10) et espacé de celui-ci, **en ce que** le levier de pivotement (10) est disposé sur le cadre (2) de façon à pouvoir pivoter par l'intermédiaire de l'axe de pivotement (11), et **en ce que** l'arrangement d'écran latéral (6) peut être bloqué au niveau des différents écarts latéraux par rotation du levier de pivotement (10) autour de l'axe de pivotement (11).

2. Machine de traitement du sol (1) selon la revendication 1, **caractérisée en ce que** l'arrangement de positionnement (9) comporte au moins un dispositif de verrouillage (14), **en ce que** l'arrangement d'écran latéral (6) peut être calé dans l'état dans lequel il a été amené au moyen du dispositif de verrouillage (14).

3. Machine de traitement du sol (1) selon la revendication 2, **caractérisée en ce que** le dispositif de verrouillage (14) utilise une liaison amovible par complémentarité de formes.

4. Machine de traitement du sol (1) selon les revendications 2 et 3, **caractérisée en ce que** le dispositif de verrouillage (14) comporte au moins un axe de rotation (17) et au mois un élément de blocage (18), **en ce que** l'élément de blocage (18) est conçu pour bloquer/débloquer la liaison par complémentarité de formes.

5. Machine de traitement du sol (1) selon au moins l'une des revendications précédentes, **caractérisée en ce qu'**une position de transport et une position de travail sont attribuées à au moins deux écarts latéraux de l'écran latéral (7) par rapport aux toupies à outils (4) .

6. Machine de traitement du sol (1) selon la revendication 5, **caractérisée en ce que** la machine de traitement du sol (1) comporte un outil universel, **en ce que** la machine de traitement du sol (1) peut être amenée entre la position de transport et la position de travail au moyen de l'outil universel.

7. Machine de traitement du sol (1) selon la revendication 5, **caractérisée en ce que** la machine de traitement du sol (1) peut être amenée entre la position de transport et la position de travail au moyen d'un actionneur électrique, d'un actionneur pneumatique et/ou d'un actionneur hydraulique.

8. Machine de traitement du sol (1) selon au moins l'une des revendications précédentes, **caractérisée en ce qu'**au moins un système à ressort (13) est associé à la machine de traitement du sol (1), **en ce que** le système à ressort (13) a un effet d'assistance de l'arrangement de positionnement (9).
